(19) Europäisches Patentamt
European Patent Office
Office européen des brevets

(11) **EP 4 032 645 A1**

(12) **EUROPEAN PATENT APPLICATION**

(43) Date of publication:
**27.07.2022 Bulletin 2022/30**

(21) Application number: **21204265.9**

(22) Date of filing: **22.10.2021**

(51) International Patent Classification (IPC):
**B23D 15/04** (2006.01)    **B23D 15/08** (2006.01)
**B23D 15/12** (2006.01)    **B23D 35/00** (2006.01)
**B23D 31/00** (2006.01)

(52) Cooperative Patent Classification (CPC):
**B23D 15/04; B23D 15/08; B23D 15/12;
B23D 35/001;** B23D 31/008

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.10.2020   JP 2020177866**

(71) Applicant: **Aida Engineering Ltd.
Sagamihara-shi
Kanagawa 252-5181 (JP)**

(72) Inventor: **Ito, Takao
Sagamihara-shi, Kanagawa, 252-5181 (JP)**

(74) Representative: **Grünecker Patent- und
Rechtsanwälte
PartG mbB
Leopoldstraße 4
80802 München (DE)**

(54) **SCRAP CUTTER**

(57)    A scrap cutter 50 is provided in a subsequent stage of the press machine 40 and cuts the scrap material fed from the press machine. The scrap cutter 50 includes: a slide 54 configured to be driven to reciprocate in the vertical direction by a Scotch yoke mechanism 57; an upper blade 55 attached to the slide 54; and a lower blade 56 attached to a frame 52 and configured to cut the scrap material in cooperation with the upper blade 55. A shear angle formed by the upper blade 55 and the lower blade 56 has an angle that gradually decreases from a start of cutting of the scrap material toward an end of cutting to allow the driving torque of the crankshaft 59 of the Scotch yoke mechanism 57 to be constant from the start of cutting to the end of cutting in cutting a scrap material of a cutting capacity limit.

FIG.1

40:PRESS MACHINE

30:FEEDER

20:LEVELER

50:SCRAP CUTTER

10:UNCOILER

60:WASTE MATERIAL CONVEYOR

F.L.

EP 4 032 645 A1

**Description**

BACKGROUND OF THE INVENTION

Field of the Invention

The present invention relates to a scrap cutter, and more particularly to a scrap cutter capable of cutting scrap material fed from a press machine with high efficiency and high speed.

Description of the Related Art

The types of scrap cutters include: a scrap cutter which cuts scrap materials between a fixed blade and a moving blade (cutter blade) which is reciprocated in the vertical direction by a crank mechanism or the like; and a scrap cutter having a structure in which a cutter blade is directly attached to a lower end of a connecting rod connected to a crankshaft and is pin-guided in the vertical direction toward the vicinity of the cutter part.

Furthermore, some cutter blades have a shear angle of 0 degrees and other cutter blades have a certain shear angle. Here, the shear angle is an angle formed by the moving blade and the fixed blade.

In a case where the shear angle is 0 degrees or as the shear angle becomes small, a greater press capacity is required at the time of cutting. This requires a greater mechanical rigidity of the cutter apparatus itself and also increases the inertia of the drive unit. Therefore, this structure is not suitable for high speed operation. In contrast, as the shear angle becomes larger, the stroke of the moving blade from a start to an end of cutting increases. Because this increases the apparatus size, the structure is not suitable for high speed operation.

On the other hand, Japanese Patent Application Laid-Open No. 2009-107096 proposes a cutting machine that drives a cutter blade by a link mechanism.

The cutting machine according to Japanese Patent Application Laid-Open No. 2009-107096 is a cutting machine that cuts a thin work by causing a moving blade facing a fixed blade to cross the fixed blade. The cutting machine is configured as a four-link mechanism in which the moving blade (blade holder) is pivotally supported by two swing arms and suspended from a machine base. One of the two swing arms swings by a crank mechanism. The moving blade descends while swinging, and the moving blade diagonally crosses the fixed blade while gradually reducing the cutting angle (shear angle) of the moving blade, thereby sequentially performing pull-cut of the work from one end to the other end.

Citation List

Patent Literature 1: Japanese Patent Application Laid-Open No. 2009-107096

SUMMARY OF THE INVENTION

In the cutting machine according to Japanese Patent Application Laid-Open No. 2009-107096, the moving blade descends while being swung by the four-link mechanism so that the moving blade diagonally crosses the fixed blade while gradually reducing the cutting angle of the moving blade, thereby sequentially performing pull-cut of the work from one end to the other end. However, because the blade holder including the moving blade swings, left-right vibration is generated and the machine is not suitable for high speed operation.

In addition, the cutting machine according to Japanese Patent Application Laid-Open No. 2009-107096 gradually reduces the cutting angle (shear angle) of the moving blade by swinging the moving blade at the time of cutting the work. As a result, it can eliminate or reduce breakage of the cut section of the work at the final stage of cutting to make the cut surface uniform and fine. However, the reason why the shear angle is gradually reduced is not in consideration of the press capacity at the time of cutting.

The present invention has been made in view of such circumstances, and aims to provide a scrap cutter capable of cutting a scrap material fed from a press machine with high efficiency and high speed.

In order to achieving the above object, an invention according to a first aspect is a scrap cutter provided in a subsequent stage of a press machine and configured to cut a scrap material fed from the press machine, the scrap cutter including: a slide configured to be driven to reciprocate in the vertical direction by a crank mechanism; an upper blade attached to the slide; and a lower blade attached to a fixed part and configured to cut the scrap material in cooperation with the upper blade, wherein a shear angle formed by the upper blade and the lower blade has an angle which gradually decreases from a start of cutting of the scrap material toward an end of cutting of the scrap material, and allows a driving torque of a crankshaft of the crank mechanism to be constant from the start of cutting to the end of cutting in a case where a scrap material of a cutting capacity limit is cut.

According to the first aspect of the present invention, the shear angle has an angle which gradually decreases from the start of cutting the scrap material toward the end of cutting the scrap material, and allows the driving torque of the crankshaft of the crank mechanism that drives the slide having an upper blade attached thereto to reciprocate in the vertical direction to be constant, particularly in a case where the scrap material of the cutting capacity limit is cut. Therefore, it is possible to minimize the driving torque of the crankshaft in cutting the scrap material of the cutting capacity limit, minimize the inertia, stroke and vibration, and downsize the scrap cutter. As a result, the scrap material can be cut with high efficiency and high speed.

In the scrap cutter according to a second aspect of the present invention, the scrap material of the cutting capacity limit is determined by a thickness and a shear resistance of a material.

Because the shear angle is determined based on the scrap material of the cutting capacity limit, the scrap cutter according to the present invention can naturally cut scrap materials within the cutting capacity limit with high efficiency and high speed.

In the scrap cutter according to a third aspect of the present invention, the tangential force F in a tangential direction of the crankshaft is expressed by the following expression

$$F = T / r$$

where T represents the driving torque applied to the crankshaft of the crank mechanism, and r represents the crank radius of the crankshaft,
a pushing force P by the upper blade is expressed by the following expression

$$P = F/(\sin \theta * n * s) = T/(r * \sin \theta * n * s)$$

where $\theta$ represents a rotation angle from the top dead center of the crankshaft, n equals 1 for an asymmetrically inclined blade and equals 2 for a symmetrically inclined blade, and s represents a safety factor, and
the shear angle $\alpha$ is expressed by the following expression

$$\alpha = -\tan^{-1}(Kfc * t^2/ 2P) = -\tan^{-1}(Kfc * t^2 * n * s * r * \sin \theta/2T)$$

where t represents a thickness of the scrap material of the cutting capacity limit, and Kfc represents a shear resistance of the scrap material of the cutting capacity limit. The sign * in the above expressions means multiplication.

In the scrap cutter according to a fourth aspect of the present invention, in an xy coordinate system in which an x-axis is a longitudinal direction of a cutter blade which is at least one of the upper blade and the lower blade, and a y-axis is a direction orthogonal to the x-axis, a coordinate (x, y) on a cutting edge of the cutter blade is expressed by the following expressions

$$x = (r/A) * (\pi-\theta),$$

and

$$y = -r(1 + \cos \theta)$$

where

$$A = Kfc * t^2 * n * s * r/2T.$$

In a case where the blade shape of the cutter blade is represented by the coordinates (x, y) on the cutting edge of the cutter blade in the xy coordinate system and the other blade has a horizontal shape, the upper blade and the lower blade form the above-described shear angle $\alpha$.

In the scrap cutter according to a fifth aspect of the present invention, the crank mechanism is preferably a Scotch yoke mechanism.

In the scrap cutter according to a sixth aspect of the present invention, at least one of the upper blade and the lower blade is a cutter blade having an asymmetrically inclined blade that is asymmetric with respect to a center of the cutter blade, or a symmetrically inclined blade that is symmetrical with respect to the center of the cutter blade.

The cutter blade may be an asymmetrically inclined blade (single-edged blade), or may be a symmetrically inclined blade (double-edged blade). The single-edged blade has an inclination angle different from that of the double-edged blade. However, The single-edged blade has the same height of the blade, as the double-edged blade.

According to the present invention, the shear angle formed by the upper blade and lower blade is optimized so that the scrap material fed from the press machine can be cut with high efficiency and high speed.

BRIEF DESCRIPTION OF THE DRAWINGS

Fig. 1 is a layout diagram of a press line including a scrap cutter according an embodiment of the present invention;
Fig. 2 is a front view of the scrap cutter;
Fig. 3 is a diagram illustrating a pushing force applied to a cutter blade due to a driving torque of a crankshaft;
Figs. 4A and 4B are diagrams showing types of blade shapes of the cutter blades;
Fig. 5 is a diagram showing a relationship between a position of a double-edged cutter blade (upper blade) and a rotation angle of a crankshaft;
Fig. 6 is a diagram illustrating a relationship between a pushing force applied to a cutter blade having an inclination angle and the shear area of a scrap material that can be sheared by the pushing force;
Figs. 7A and 7B are graphs showing examples of blade shapes of the cutter blades;
Fig. 8 is a chart showing a part of calculation results such as xy coordinates on the cutting edge of a cutter blade;
Fig. 9 is a chart showing the other part of the calculation results such as xy coordinates on the cutting edge of the cutter blade; and
Fig. 10 is a graph showing a blade shape of a cutter blade created by plotting the xy coordinates of points 0 to 50 on the cutting edge of the cutter blade.

DETAILED DESCRIPTION OF THE PREFERRED EMBODIMENTS

Preferred embodiments of scrap cutters according to the present invention is to be described below in detail with reference to the accompanying drawings.

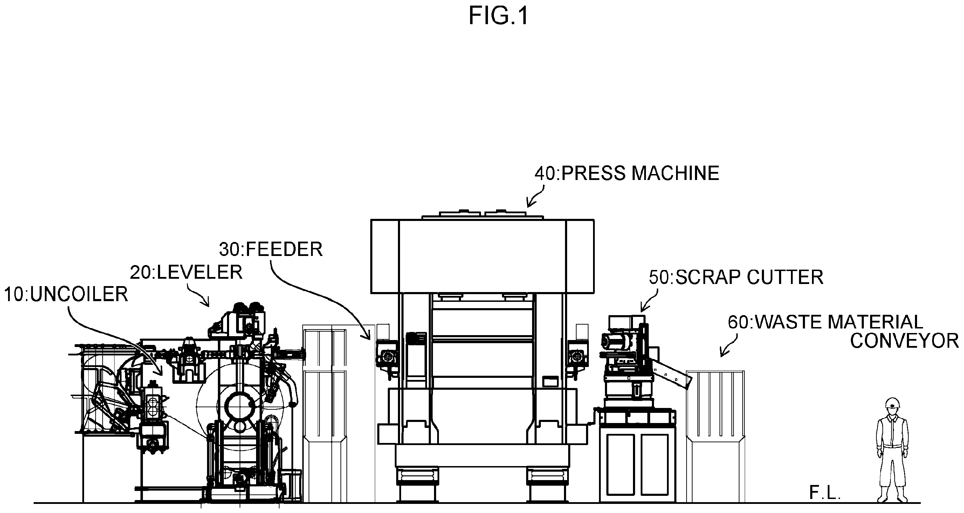

Fig. 1 is a layout diagram of a press line including a scrap cutter according to the present invention.

The press line shown in Fig. 1 includes an uncoiler 10, a leveler 20, a feeder 30, a press machine 40, a scrap cutter 50 and a waste material conveyor 60, which are sequentially arranged in this order.

The uncoiler 10 is a material supply apparatus that unwinds a material wound around a drum in a coil shape (coil material) and supplies the unwound coil material while controlling the bending of the coil material.

The leveler 20 is arranged between the uncoiler 10 and the feeder 30. The leveler 20 holds (sandwiches) the coil material between a plurality of alternately arranged rolls, and alternately deforms the coil material in the vertical direction to remove the strain from the coil material having curl.

The feeder 30 is a material feeding apparatus that feeds the coil material into the die of the press machine 40 at regular intervals.

The press machine 40 performs operation such as cutting-out the outer shapes of the products from the coil material.

The scrap cutter 50 is provided in the subsequent stage of the press machine 40. The scrap cutter 50 cuts a scrap material (punching scrap of the coil material) fed from the press machine 40 into a size that is easy to handle, and discharges the cut scrap material to the waste material conveyor 60. The scrap cutter 50 of the example is operated in synchronization with the press machine 40.

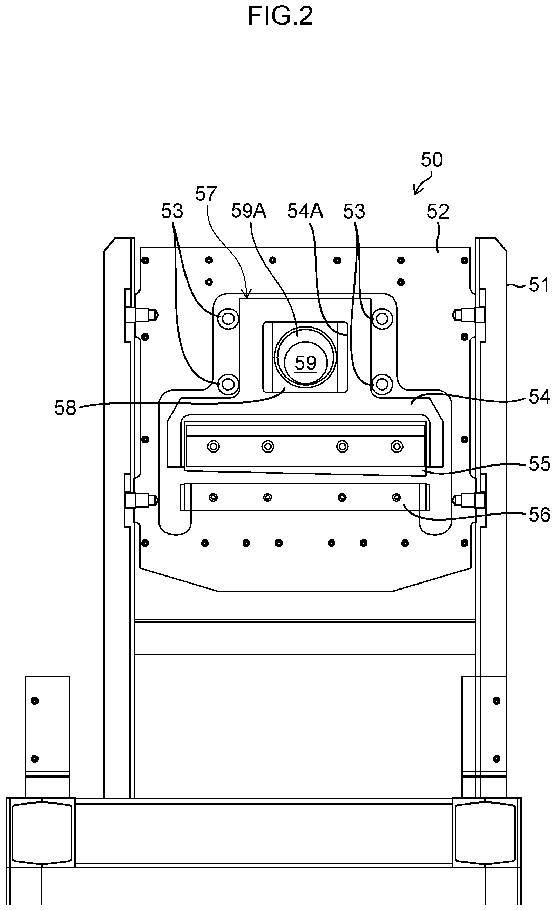

Fig. 2 is a front view of the scrap cutter 50.

As shown in Fig. 2, the scrap cutter 50 includes: a frame 52 that functions as a fixed part fixed by a column 51; a slide 54 that is guided by a guide 53 so as to be movable in the vertical direction in the frame 52; an upper blade (moving blade) 55 attached to the slide 54; a lower blade (fixed blade) 56 attached to the frame 52; and a Scotch yoke mechanism 57 which is a type of crank mechanism that drives the slide 54 to reciprocate in the vertical direction.

The Scotch yoke mechanism 57 according to the example includes: a slider 58; and a crankshaft 59. The slide 58 is provided so as to be movable in the left-right direction, in a rectangular opening 54A formed in the slide 54. Here, the left-right direction is a direction orthogonal to the vertical direction, and the vertical direction is the moving direction of the slide 54. To the crankshaft 59, rotational driving force is transmitted from a servomotor (not shown), and an eccentric part 59A of the crankshaft 59 is rotatably inserted into the slider 58 via a bearing.

In the Scotch yoke mechanism 57, one rotation of the crankshaft 59 once reciprocates the slider 58 in the vertical direction and in the left-right direction, depending on the amount of eccentricity (crank radius) of the eccentric part 59A. The movement of the slider 58 in the left-right direction is not transmitted to the slide 54 by the opening 54A formed in the slide 54, and only the movement of the slider 58 in the vertical direction is transmitted to the slide 54, so that the slide 54 is driven to reciprocate in the vertical direction.

Because the Scotch yoke mechanism 57 is used as the crank mechanism, the motion of the upper blade 55, which is the moving blade, turns into a sine motion. In addition, because the driving force is transmitted only in the vertical direction to the slide 54 to which the upper blade 55 is attached, it is possible to suppress the left-right vibration.

The scrap material fed from the press machine 40 is set between the upper blade 55 and the lower blade 56 of the scrap cutter 50 during a period when there is a gap between the upper blade 55 and the lower blade 56 (for example, the period in the range of ± 90 degrees where 0 degree represents the rotation angle of the crankshaft 59 when the slide 54 is located at the top dead center), and then, the scrap material is cut with the descending upper blade 55 which works in cooperation with the lower blade 56.

Next, description is to be made on the blade shape of cutter blade which is at least one of the upper blade 55 and the lower blade 56. Here, the blade shape of the cutter blade described below is for the blade shape of the upper blade 55.

The scrap cutter 50 cuts various scrap materials having various materials, plate thicknesses, and the like. The scrap cutter according to the present example has a shear angle formed by the upper blade 55 and the lower blade 56 designed as shown below so as to highly efficiently cut a scrap material of an allowable limit of the cutting capacity (a scrap material of a cutting capacity limit).

The shear angle formed by the upper blade 55 and the lower blade 56 is applied to the scrap cutter 50. The shear angle gradually decreases from a start of cutting of the scrap material toward an end of cutting so as to allow the driving torque of the crankshaft of the crank mechanism to be constant from the start of cutting to the end of cutting in a case where the scrap material of the cutting capacity limit is cut.

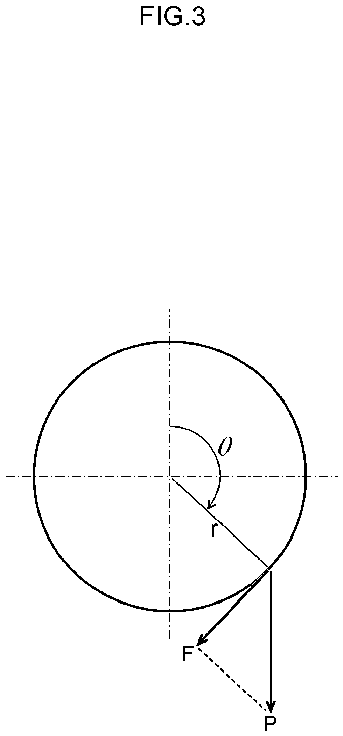

Fig. 3 is a diagram illustrating a pushing force applied to the cutter blade by the driving torque of the crankshaft.

With reference to Fig. 3, the tangential force F in the tangential direction of the crankshaft is expressed by the following expression

$$F = T/r$$

wherein:

T represents the driving torque applied to the crankshaft; and
r represents the crank radius.

Furthermore, the pushing force P by the cutter blade is expressed by the following expression

[Expression 1]

$$P = F/(\sin \theta * n * s) = T/(r * \sin \theta * n * s)$$

wherein:

$\theta$ represents a rotation angle from the top dead center of the crankshaft;
n is 1 for an asymmetrically inclined blade, and 2 for a symmetrically inclined blade; and
s represents a safety factor.

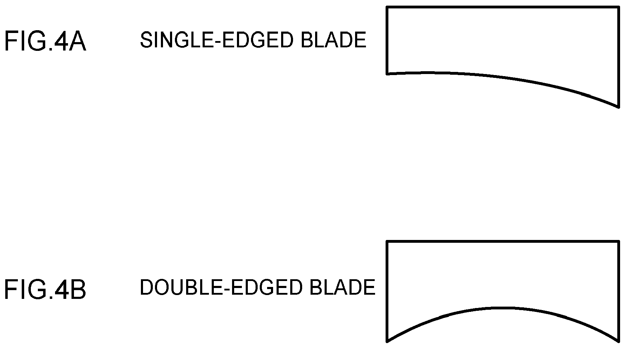

Figs. 4A and 4B are diagrams showing types of the blade shapes of the cutter blade.

The cutter blade shown in Fig. 4A is an asymmetrically inclined blade that is bilaterally asymmetrical with respect to the center of the cutter blade, and is a single-edged blade that cuts from one end toward the other end of the scrap material at the time of cutting the scrap material.

The cutter blade shown in Fig. 4B is a symmetrically inclined blade that is bilaterally symmetrical with respect to the center of the cutter blade, and is a double-edged blade that cuts from both ends of the scrap material toward the center of the scrap material at the time of cutting the scrap material.

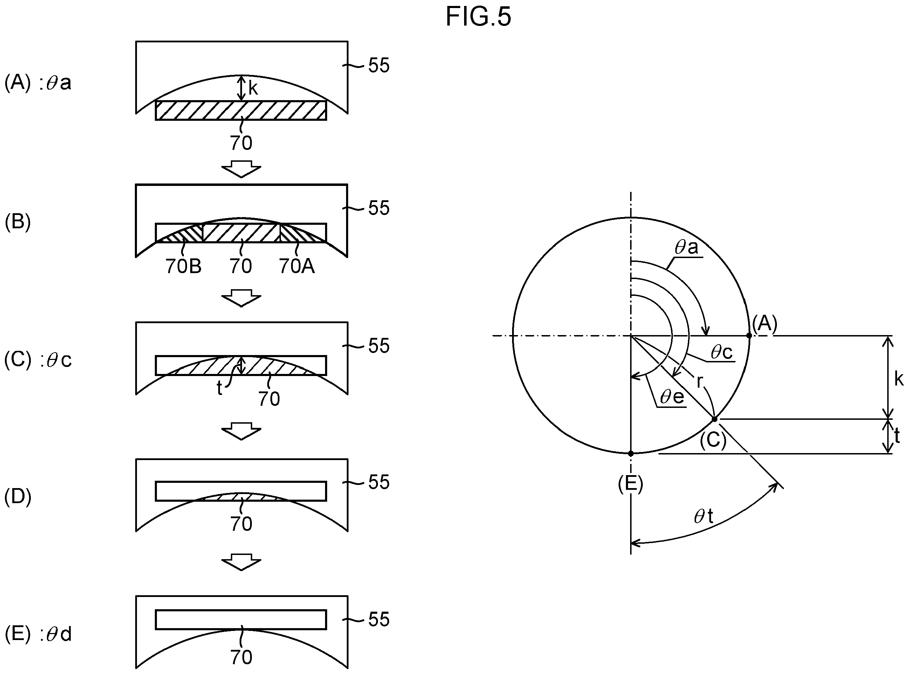

Fig. 5 is a diagram showing a relationship between a position of the double-edged cutter blade (upper blade) and the rotation angle of the crankshaft, and Part (A) to Part (E) show the respective positions of the upper blade from the start of cutting to the end of cutting of the scrap material.

Part (A) shows the position of the upper blade 55 when the rotation angle of the crankshaft is an angle θa. The position of the upper blade 55 shown in Part (A) is the position when the upper blade 55 first comes into contact with the scrap material 70 after the upper blade 55 descends as the crankshaft rotates. Cutting of the scrap material 70 starts from this position of the upper blade 55.

Part (C) shows the position of the upper blade 55 when the rotation angle of the crankshaft is an angle θc.

The position of the upper blade 55 shown in Part (C) indicates the position when the uppermost point of the upper blade 55 (center of the upper blade 55) reaches the upper surface of the scrap material 70 after the upper blade 55 further descends.

Part (B) shows the position of the upper blade 55 when the rotation angle of the crankshaft is between the angle θa and the angle θc, where a part of the upper blade 55 reaches the lower surface of the scrap material 70. Here in Part (B), the reference signs 70A and 70B designate shear surfaces that can be sheared by the pushing force applied to the upper blade 55 at this position.

While the upper blade 55 moves from the position shown in Part (A) to the position shown in Part (C), the shear angle formed by the upper blade 55 and the lower blade 56 gradually decreases with the stroke of the upper blade 55. This allows the driving torque of the crankshaft of the crank mechanism to be constant in cutting the scrap material of the cutting capacity limit.

In addition, the stroke length k of the upper blade 55 from the position shown in Part (A) to the position shown in Part (C) (from the crankshaft angle θa to the crankshaft angle θc) is equal to a gap k created by the shear angle of the upper blade 55 between the uppermost point of the upper blade 55 and the upper surface of the scrap material 70 when the upper blade 55 is in the position shown in Part (A).

Part (E) shows the position of the upper blade 55 when the rotation angle of the crankshaft reaches the angle θe (the slide 54 is at the bottom dead center). When the upper blade 55 reaches the position shown in Part (E), the cutting of the scrap material 70 ends.

The stroke length of the upper blade 55 from the position shown in Part (C) to the position shown in Part (E) (crankshaft angle θc to angle θe) is the same as the plate thickness t of the scrap material 70.

Part (D) shows the position of the upper blade 55 when the rotation angle of the crankshaft is between the angle θc and the angle θe.

As the upper blade 55 descends from the position shown in Part (C) to the position shown in Part (E), the uncut part of the scrap material 70 gradually decreases in the height and width as shown in Part (C). Therefore, the pushing force of the upper blade 55 required for cutting the scrap material 70 between the position shown in Part (C) and the position shown in Part (E) also gradually decreases with the stroke of the upper blade 55, so that the crankshaft torque is sufficient therethrough.

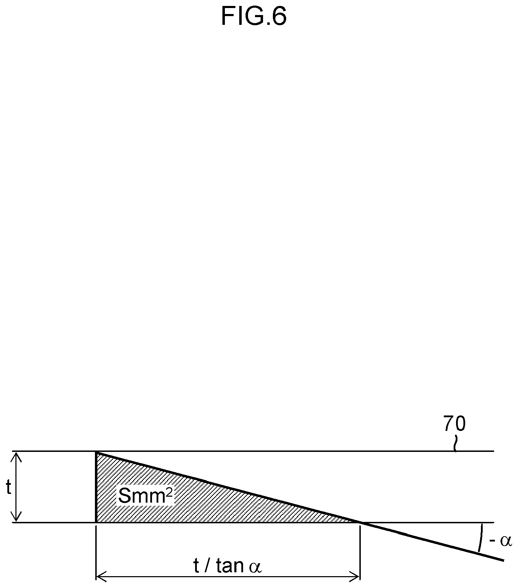

Fig. 6 is a diagram illustrating the relationship between the pushing force applied to the cutter blade and the shear area of the scrap material that can be sheared by the pushing force. In the example, the upper blade 55, which is a moving blade, is an asymmetrically inclined blade or a symmetrically inclined blade, the lower blade 56, which is a fixed blade, is a horizontal blade without inclination, and the upper blade 55 moves in the vertical direction. As a result, the inclination angle of the cutter blade (upper blade 55) corresponds to the shear angle.

In Fig, 6, the shear area S $[mm^2]$ of the scrap material 70 that can be sheared by the pushing force P [N] applied to the cutter blade is expressed by the following expression

[Expression 2]

$$S = P/Kfc = t^2/(2\tan \alpha)$$

wherein:

(—α) represents the shear angle corresponding to the inclination angle of the cutter blade;
t represents the plate thickness [mm] of the scrap material 70; and
Kfc represents a shear resistance $[N/mm^2]$.

By substituting [Expression 1] for P in [Expression 2] and converting the expression with respect to the shear angle α, the shear angle α can be expressed by the following expression.

[Expression 3]

$$\alpha = -\tan^{-1} (Kfc * t^2/ 2P) = -\tan^{-1} (Kfc * t^2 * n * s * r * \sin \theta/2T)$$

The shear angle $\alpha$ indicated in [Expression 3] is an angle that gradually decreases from the start of cutting of the scrap material toward the end of cutting (with the rotation angle $\theta$ of the crankshaft being a variable). In addition, this shear angle $\alpha$ is an angle at which the scrap material can be cut with a constant driving torque T of the crankshaft (in a state where the maximum torque is output) from the start of cutting to the end of cutting, in cutting the scrap material of the cutting capacity limit which is determined by the plate thickness t and shear resistance Kfc.

The scrap cutter 50 having the above configuration can reduce the crankshaft driving torque T (rated torque of the servomotor that drives the crankshaft) required for cutting the scrap material of the cutting capacity limit. In addition, the scrap cutter 50 can reduce the inertia of the part including the slide 54 and the upper blade 55, that reciprocates in the vertical direction. Therefore, it is possible to cut the scrap material fed from the press machine with high efficiency and high speed.

Next, description is to be made on a case in which the blade shape of the cutter blade, which has an inclination corresponding to the shear angle $\alpha$ shown in [Expression 3], is defined in a two-dimensional coordinate. Here, the blade shape of the cutter blade is defined in an xy coordinate system in which the x-axis direction represents the longitudinal direction of the cutter blade and the y-axis direction represents the moving direction of the cutter blade.

[Expression 3] can be converted to the following expression.

$$[\text{Expression 4}]$$
$$\alpha = -\tan^{-1}(A * \sin\theta)$$
$$\therefore \tan\alpha = -A * \sin\theta$$

wherein A represents $Kfc * t^2 * n * s * r/2T$ in [Expression 3].

The inclination dy/dx of the cutting edge of the cutter blade in the xy coordinate system can be expressed by the following expression based on [Expression 4].

$$[\text{Expression 5}]$$
$$dy/dx = \tan\alpha = -A * \sin\theta$$

On the other hand, the y coordinate on the cutting edge of the cutter blade is expressed by the following expression using the rotation angle $\theta$ of the crankshaft and the crank radius r.

$$[\text{Expression 6}]$$
$$y = -r(1 + \cos\theta)$$

When [Expression 6] is differentiated by $\theta$, the result can be expressed by the following expression.

$$[\text{Expression 7}]$$
$$dy/d\theta = r * \sin\theta$$

From [Expression 5] and [Expression 7], the following expression is established.

$$[\text{Expression 8}]$$
$$dx/d\theta = (dy/d\theta)/(dy/dx) = (r * \sin\theta)/(-A * \sin\theta) = -r/A$$

By integrating [Expression 8] by $\theta$, the x coordinate on the cutting edge of the cutter blade can be expressed by the following expression.

[Expression 9]

$$x = -(r/A) * \theta + C = -(r/A) * \theta + (r/A) * \pi = (r/A) * (\pi - \theta)$$

wherein:
C represents integration constant; and

$$A = Kfc * t^2 * n * s * r/ 2T.$$

Therefore, the coordinates (x, y) on the cutting edge of the cutter blade can be expressed by the following expressions from [Expression 6] and [Expression 9].

[Expression 10]

$$x = (r/A)(\pi - \theta)$$

$$y = -r(1 + \cos \theta)$$

wherein:

$$A = Kfc * t^2 * n * s * r/2T;$$

and
$\theta$ varies from 0 to $\pi$

In addition, if y = -r(1 + cos $\theta$) = h, then

$$\cos \theta = -h/r - 1$$

$$\therefore \theta = \cos^{-1} (-h/r - 1)$$

wherein h0 $\leq$ h $\leq$ h1, h0 is the cutting end height, and h1 is the cutting start height. Therefore, [Expression 10] can be converted to the following expression.

[Expression 11]

$$x = (r/A) \{\pi - \cos^{-1} (-h/r - 1)\}$$

$$y = h$$

wherein A = Kfc $* t^2 * n * s * r/2T$.

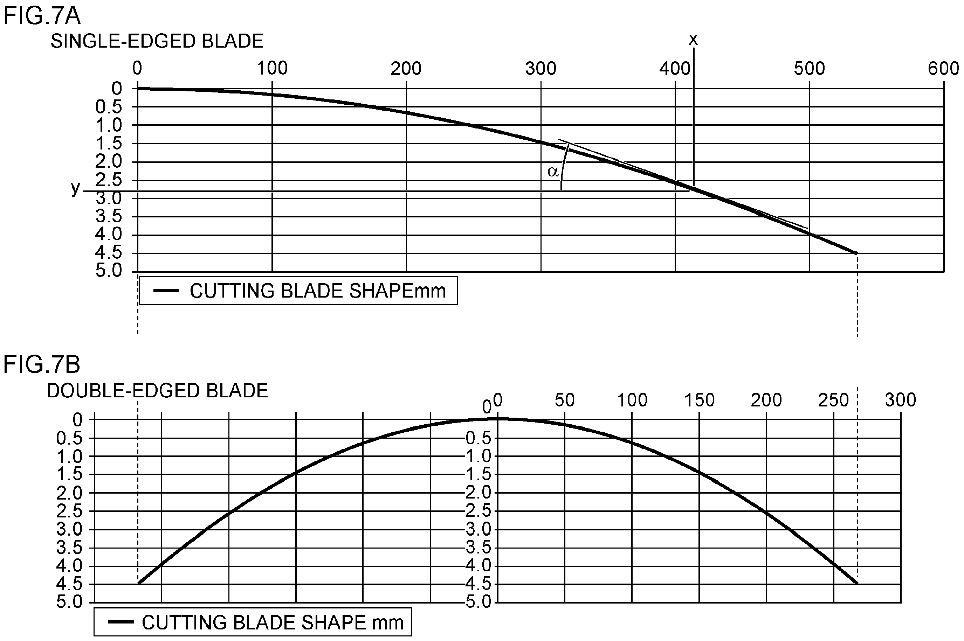

Figs. 7A and 7B illustrate graphs showing examples of blade shapes of the cutter blades.
The blade shape of the cutter blade can be calculated, for example, by appropriately giving constants and the variable h in [Expression 11]. The details are to be described below.
Fig. 7A shows a blade shape in a case where the cutter blade is a single-edged blade, and Fig. 7B shows a blade shape in a case where the cutter blade is a double-edged blade.
As shown in Figs. 7A and 7B, the heights of the cutter blades are the same in both the single-edged blade and the double-edged blade. On the other hand, the inclination angle corresponding to the shear angle $\alpha$ is greater in the double-edged blade than in the single-edged blade.
Next, the x coordinate corresponding to each of the y coordinates on the cutting edge of the cutter blade is calculated under the condition that the constants shown below are entered into [Expression 11], and then the difference (h1 - h0 = 6 [mm]) between the cutting start height h1 and the cutting end height h0 of the cutter blade is divided into 50 equal parts.

<Constants>

The driving torque T of the crankshaft: 70 [Nm]

The crank radius r: 12.5 [mm]

The shear resistance Kfc of the scrap material: 637 [N/mm$^2$]

The plate thickness t of the scrap material: 0.3 [mm]

The blade shape (number of cuts) n: 2 (1 for the single-edged blade, 2 for the double-edged blade)

The cutting end height h0: 0 [mm]

The cutting start height h1: 6 [mm]

The safety factor s: 2

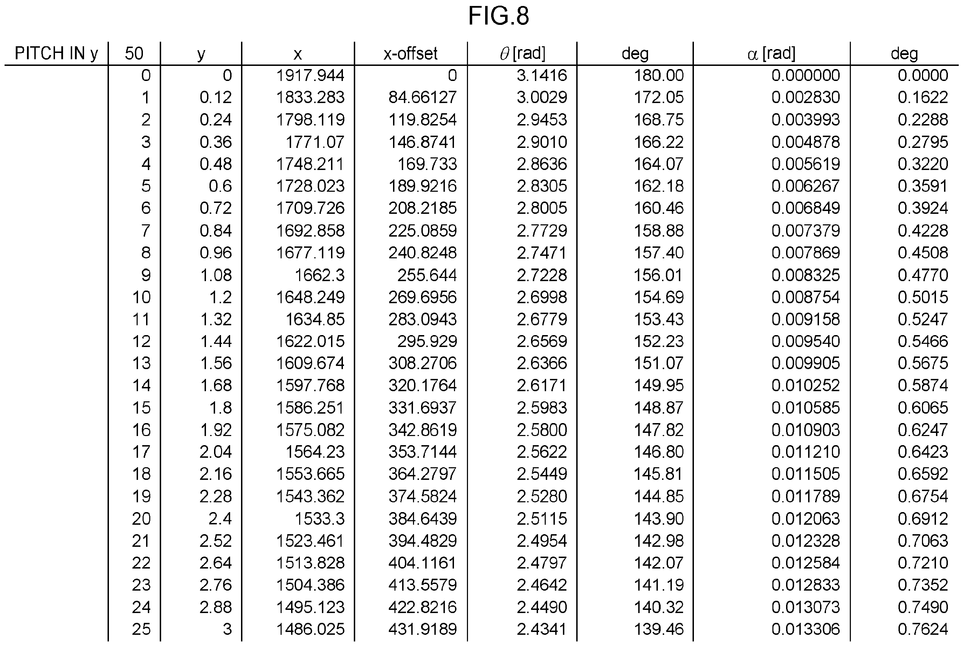

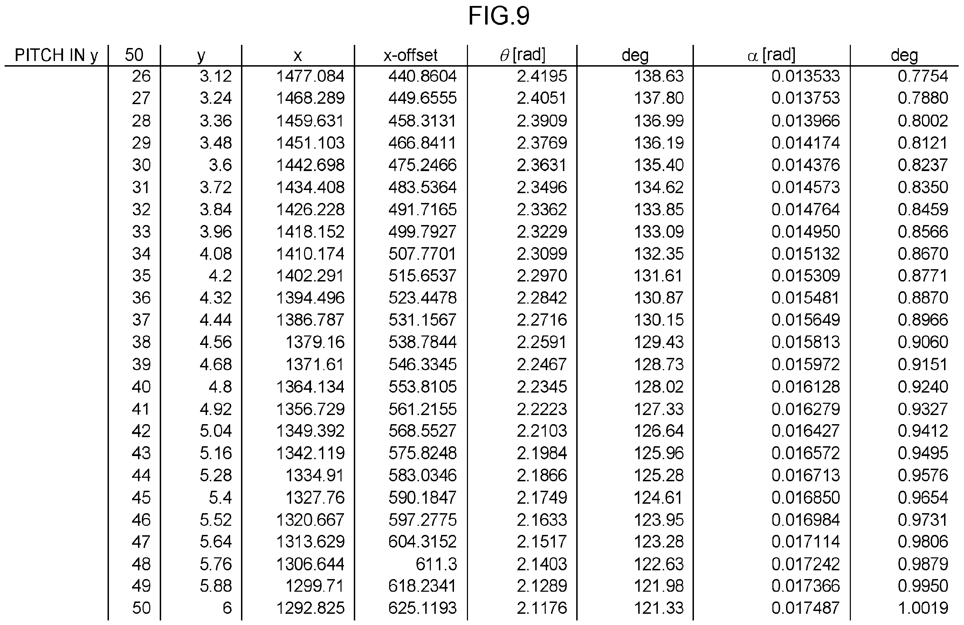

Figs. 8 and 9 are charts showing the calculation results of xy coordinates and the corresponding values of the respective cutter blades.

Y coordinates are obtained for 51 points on the cutting edge of the cutter blade in a case where the height of the cutter blade (difference between the cutting start height and the cutting end height) is divided into 50 equal parts. X coordinates corresponding to each of the y coordinates can be obtained by calculation. Fig. 8 shows the calculation results of xy coordinates for points 0 to 25 of the 51 points on the cutting edge of the cutter blade, and Fig. 9 shows the calculation results of xy coordinates for the other points 26 to 50.

In addition, Figs. 8 and 9 show the rotation angles $\theta$ [rad] and $\theta$ [deg] of the crankshaft and the shear angles $\alpha$ [rad] and $\alpha$ [deg], each corresponding to the points 0 to 50, in addition to the xy coordinates of the points 0 to 50. The x-offsets in Figs. 8 and 9 represent x coordinates in a case where the x coordinate corresponding to the cutting end height h0 (y = 0) is set (offset) to x = 0.

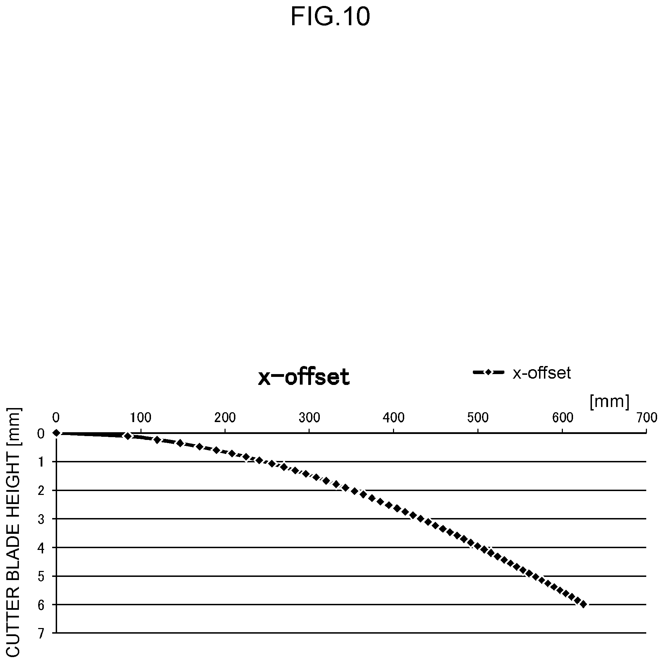

Fig. 10 is a graph showing the blade shape of the cutter blade, which is created by plotting the xy coordinates at the points 0 to 50 on the cutting edge of the cutter blade shown in Figs. 8 and 9.

The graph in Fig. 10 shows only one side from the center of the cutter blade in a case where the cutter blade is the double-edged blade. In a case where the cutter blade is a single-edged blade, x = 0 is the left end of the cutter blade.

[Others]

In the embodiment, a continuously changing inclination is provided to the upper blade (moving blade) without providing an inclination to the lower blade (fixed blade), so as to continuously change the shear angle $\alpha$ formed by the fixed blade and the moving blade from the start of cutting of the scrap material to the end of cutting. On the contrary, a continuously changing inclination may be provided to the fixed blade without providing an inclination to the moving blade, so as to continuously change the shear angle $\alpha$ formed by the fixed blade and the moving blade from the start of cutting of the scrap material to the end of cutting.

Furthermore, in the embodiment, the Scotch yoke mechanism is used as the crank mechanism for driving the upper blade (moving blade) to reciprocate in the vertical direction, but the present invention is not limited to this configuration. For example, a slide-crank mechanism in which the eccentric part of the crankshaft is connected to the slide with a connecting rod, may be applied. In a case where the conrod stroke ratio (connecting rod length/crank radius) of the slide-crank mechanism is large to some extent, the movement of the slide becomes substantially sinusoidal motion, so that the calculation expression used in the Scotch yoke mechanism can be used as it is. Note that a large conrod stroke ratio is suitable for high speed operation.

Furthermore, the present invention is not limited to the above-described embodiment. Needless to say, various modifications can be made without departing from the spirit of the present invention.

Reference Signs List

10: uncoiler
20: leveler
30: feeder
40: press machine
50: scrap cutter
51: column
52: frame
53: guide
54: slide
54A: opening

55: upper blade
56: lower blade
57: Scotch yoke mechanism
58: slider
59: crankshaft
59A: eccentric part
60: waste material conveyor
70: scrap material

**Claims**

1. A scrap cutter (50) provided in a subsequent stage of a press machine (40) and configured to cut a scrap material fed from the press machine (40), the scrap cutter (50) comprising:

   a slide (54) configured to be driven to reciprocate in the vertical direction by a crank mechanism (57);
   an upper blade (55) attached to the slide (54); and
   a lower blade (56) attached to a fixed part (52) and configured to cut the scrap material in cooperation with the upper blade (55),
   wherein a shear angle formed by the upper blade (55) and the lower blade (56) has an angle which gradually decreases from a start of cutting of the scrap material toward an end of cutting of the scrap material, and allows a driving torque of a crankshaft (59) of the crank mechanism (57) to be constant from the start of cutting to the end of cutting in a case where a scrap material of a cutting capacity limit is cut.

2. The scrap cutter (50) according to claim 1, wherein
   the scrap material of the cutting capacity limit is determined by a thickness and a shear resistance of a material.

3. The scrap cutter (50) according to claim 1 or 2, wherein:

   a tangential force F in a tangential direction of the crankshaft (59) is expressed by a following expression

   $$F = T / r$$

   where
   T represents the driving torque applied to the crankshaft (59) of the crank mechanism (57), and
   r represents the crank radius of the crankshaft (59);
   a pushing force P by the upper blade (55) is expressed by the following expression

   $$P = F/(\sin \theta * n * s) = T/(r * \sin \theta * n * s)$$

   where
   $\theta$ represents a rotation angle from the top dead center of the crankshaft (59),
   n equals 1 for an asymmetrically inclined blade and equals 2 for a symmetrically inclined blade, and
   s represents a safety factor; and
   the shear angle $\alpha$ is expressed by the following expression

   $$\alpha = -\tan^{-1} (Kfc * t^2 / 2P) = -\tan^{-1} (Kfc * t^2 * n * s * r * \sin \theta/2T)$$

   where
   t represents a thickness of the scrap material of the cutting capacity limit, and
   Kfc represents a shear resistance of the scrap material of the cutting capacity limit.

4. The scrap cutter (50) according to claim 3, wherein
   in an xy coordinate system in which an x-axis is a longitudinal direction of a cutter blade which is at least one of the upper blade (55) and the lower blade (56), and a y-axis is a direction orthogonal to the x-axis, a coordinate (x, y) on a cutting edge of the cutter blade is expressed by the following expressions

$$x = (r/A) * (\pi-\theta),$$

and

$$y = -r(1 + \cos \theta)$$

where

$$A = Kfc * t^2 * n * s * r/2T.$$

5. The scrap cutter (50) according to any one of claims 1 to 4, wherein
the crank mechanism (57) is a Scotch yoke mechanism.

6. The scrap cutter (50) according to any one of claims 1 to 5, wherein
at least one of the upper blade (55) and the lower blade (56) is a cutter blade having an asymmetrically inclined blade that is asymmetric with respect to a center of the cutter blade, or a symmetrically inclined blade that is symmetrical with respect to the center of the cutter blade.

FIG.1

40:PRESS MACHINE

30:FEEDER

20:LEVELER

10:UNCOILER

50:SCRAP CUTTER

60:WASTE MATERIAL CONVEYOR

F.L.

# FIG.2

# FIG.3

FIG.4A   SINGLE-EDGED BLADE

FIG.4B   DOUBLE-EDGED BLADE

FIG.5

(A) : $\theta a$

(B)

(C) : $\theta c$

(D)

(E) : $\theta d$

55

70

55

70B   70   70A

55

t   70

55

70

55

70

$\theta a$

$\theta c$

r

$\theta e$

(A)

k

(C)

t

(E)

$\theta t$

EP 4 032 645 A1

# FIG.6

70

t

Smm$^2$

t / tan $\alpha$

- $\alpha$

FIG.7A
SINGLE-EDGED BLADE

—— CUTTING BLADE SHAPEmm

FIG.7B
DOUBLE-EDGED BLADE

—— CUTTING BLADE SHAPE mm

EP 4 032 645 A1

# FIG.8

| PITCH IN y | 50 | y | x | x-offset | $\theta$ [rad] | deg | $\alpha$ [rad] | deg |
|---|---|---|---|---|---|---|---|---|
| | 0 | 0 | 1917.944 | 0 | 3.1416 | 180.00 | 0.000000 | 0.0000 |
| | 1 | 0.12 | 1833.283 | 84.66127 | 3.0029 | 172.05 | 0.002830 | 0.1622 |
| | 2 | 0.24 | 1798.119 | 119.8254 | 2.9453 | 168.75 | 0.003993 | 0.2288 |
| | 3 | 0.36 | 1771.07 | 146.8741 | 2.9010 | 166.22 | 0.004878 | 0.2795 |
| | 4 | 0.48 | 1748.211 | 169.733 | 2.8636 | 164.07 | 0.005619 | 0.3220 |
| | 5 | 0.6 | 1728.023 | 189.9216 | 2.8305 | 162.18 | 0.006267 | 0.3591 |
| | 6 | 0.72 | 1709.726 | 208.2185 | 2.8005 | 160.46 | 0.006849 | 0.3924 |
| | 7 | 0.84 | 1692.858 | 225.0859 | 2.7729 | 158.88 | 0.007379 | 0.4228 |
| | 8 | 0.96 | 1677.119 | 240.8248 | 2.7471 | 157.40 | 0.007869 | 0.4508 |
| | 9 | 1.08 | 1662.3 | 255.644 | 2.7228 | 156.01 | 0.008325 | 0.4770 |
| | 10 | 1.2 | 1648.249 | 269.6956 | 2.6998 | 154.69 | 0.008754 | 0.5015 |
| | 11 | 1.32 | 1634.85 | 283.0943 | 2.6779 | 153.43 | 0.009158 | 0.5247 |
| | 12 | 1.44 | 1622.015 | 295.929 | 2.6569 | 152.23 | 0.009540 | 0.5466 |
| | 13 | 1.56 | 1609.674 | 308.2706 | 2.6366 | 151.07 | 0.009905 | 0.5675 |
| | 14 | 1.68 | 1597.768 | 320.1764 | 2.6171 | 149.95 | 0.010252 | 0.5874 |
| | 15 | 1.8 | 1586.251 | 331.6937 | 2.5983 | 148.87 | 0.010585 | 0.6065 |
| | 16 | 1.92 | 1575.082 | 342.8619 | 2.5800 | 147.82 | 0.010903 | 0.6247 |
| | 17 | 2.04 | 1564.23 | 353.7144 | 2.5622 | 146.80 | 0.011210 | 0.6423 |
| | 18 | 2.16 | 1553.665 | 364.2797 | 2.5449 | 145.81 | 0.011505 | 0.6592 |
| | 19 | 2.28 | 1543.362 | 374.5824 | 2.5280 | 144.85 | 0.011789 | 0.6754 |
| | 20 | 2.4 | 1533.3 | 384.6439 | 2.5115 | 143.90 | 0.012063 | 0.6912 |
| | 21 | 2.52 | 1523.461 | 394.4829 | 2.4954 | 142.98 | 0.012328 | 0.7063 |
| | 22 | 2.64 | 1513.828 | 404.1161 | 2.4797 | 142.07 | 0.012584 | 0.7210 |
| | 23 | 2.76 | 1504.386 | 413.5579 | 2.4642 | 141.19 | 0.012833 | 0.7352 |
| | 24 | 2.88 | 1495.123 | 422.8216 | 2.4490 | 140.32 | 0.013073 | 0.7490 |
| | 25 | 3 | 1486.025 | 431.9189 | 2.4341 | 139.46 | 0.013306 | 0.7624 |

EP 4 032 645 A1

## FIG.9

| PITCH IN y | 50 | y | x | x-offset | $\theta$ [rad] | deg | $\alpha$ [rad] | deg |
|---|---|---|---|---|---|---|---|---|
| | 26 | 3.12 | 1477.084 | 440.8604 | 2.4195 | 138.63 | 0.013533 | 0.7754 |
| | 27 | 3.24 | 1468.289 | 449.6555 | 2.4051 | 137.80 | 0.013753 | 0.7880 |
| | 28 | 3.36 | 1459.631 | 458.3131 | 2.3909 | 136.99 | 0.013966 | 0.8002 |
| | 29 | 3.48 | 1451.103 | 466.8411 | 2.3769 | 136.19 | 0.014174 | 0.8121 |
| | 30 | 3.6 | 1442.698 | 475.2466 | 2.3631 | 135.40 | 0.014376 | 0.8237 |
| | 31 | 3.72 | 1434.408 | 483.5364 | 2.3496 | 134.62 | 0.014573 | 0.8350 |
| | 32 | 3.84 | 1426.228 | 491.7165 | 2.3362 | 133.85 | 0.014764 | 0.8459 |
| | 33 | 3.96 | 1418.152 | 499.7927 | 2.3229 | 133.09 | 0.014950 | 0.8566 |
| | 34 | 4.08 | 1410.174 | 507.7701 | 2.3099 | 132.35 | 0.015132 | 0.8670 |
| | 35 | 4.2 | 1402.291 | 515.6537 | 2.2970 | 131.61 | 0.015309 | 0.8771 |
| | 36 | 4.32 | 1394.496 | 523.4478 | 2.2842 | 130.87 | 0.015481 | 0.8870 |
| | 37 | 4.44 | 1386.787 | 531.1567 | 2.2716 | 130.15 | 0.015649 | 0.8966 |
| | 38 | 4.56 | 1379.16 | 538.7844 | 2.2591 | 129.43 | 0.015813 | 0.9060 |
| | 39 | 4.68 | 1371.61 | 546.3345 | 2.2467 | 128.73 | 0.015972 | 0.9151 |
| | 40 | 4.8 | 1364.134 | 553.8105 | 2.2345 | 128.02 | 0.016128 | 0.9240 |
| | 41 | 4.92 | 1356.729 | 561.2155 | 2.2223 | 127.33 | 0.016279 | 0.9327 |
| | 42 | 5.04 | 1349.392 | 568.5527 | 2.2103 | 126.64 | 0.016427 | 0.9412 |
| | 43 | 5.16 | 1342.119 | 575.8248 | 2.1984 | 125.96 | 0.016572 | 0.9495 |
| | 44 | 5.28 | 1334.91 | 583.0346 | 2.1866 | 125.28 | 0.016713 | 0.9576 |
| | 45 | 5.4 | 1327.76 | 590.1847 | 2.1749 | 124.61 | 0.016850 | 0.9654 |
| | 46 | 5.52 | 1320.667 | 597.2775 | 2.1633 | 123.95 | 0.016984 | 0.9731 |
| | 47 | 5.64 | 1313.629 | 604.3152 | 2.1517 | 123.28 | 0.017114 | 0.9806 |
| | 48 | 5.76 | 1306.644 | 611.3 | 2.1403 | 122.63 | 0.017242 | 0.9879 |
| | 49 | 5.88 | 1299.71 | 618.2341 | 2.1289 | 121.98 | 0.017366 | 0.9950 |
| | 50 | 6 | 1292.825 | 625.1193 | 2.1176 | 121.33 | 0.017487 | 1.0019 |

EP 4 032 645 A1

# FIG.10

Europäisches
Patentamt

European
Patent Office

Office européen
des brevets

# EUROPEAN SEARCH REPORT

Application Number

EP 21 20 4265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AT 372 029 B (VOEST ALPINE AG [AT]) 25 August 1983 (1983-08-25) | 1-5 | INV. B23D15/04 B23D15/08 B23D15/12 B23D35/00 B23D31/00 |
| A | * the whole document * | 6 | |

TECHNICAL FIELDS
SEARCHED       (IPC)

B23D

The present search report has been drawn up for all claims

| Place of search | Date of completion of the search | Examiner |
|---|---|---|
| The Hague | 16 June 2022 | Rabolini, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  ...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 20 4265

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2022

| Patent document cited in search report | | Publication date | Patent family member(s) | Publication date |
|---|---|---|---|---|
| AT 372029 | B | 25-08-1983 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009107096 A